# EUROPÄISCHE PATENTSCHRIFT

(11) **EP 3 331 157 B1**
(45) Veröffentlichungstag und Bekanntmachung des Hinweises auf die Patenterteilung: **26.08.2020**
(21) Anmeldenummer: 17200503.5
(22) Anmeldetag: 08.11.2017
(51) Int. Cl.: H02P 25/089, H02P 1/16, H02P 6/22

(54) **VERFAHREN UND ANSTEUEREINHEIT ZUR ANSTEUERUNG EINES GESCHALTETEN RELUKTANZMOTORS**
METHOD AND CONTROL UNIT FOR CONTROLLING A SWITCHED RELUCTANCE MOTOR
PROCÉDÉ ET UNITÉ DE COMMANDE PERMETTANT DE COMMANDER UN MOTEUR À RÉLUCTANCE COMMUTÉ

(30) Priorität: 02.12.2016 DE 102016123335
(43) Veröffentlichungstag der Anmeldung: 06.06.2018
(73) Patentinhaber: Miele & Cie. KG, 33332 Gütersloh (DE)
(72) Erfinder: Balzer, Eugen, 33729 Bielefeld (DE)

(56) Entgegenhaltungen:
- EP-A1- 0 253 436
- DE-T2- 69 016 794
- US-A1- 2016 072 413

## Beschreibung

Die vorliegende Erfindung betrifft ein Verfahren und eine Ansteuereinheit zum Ansteuern, insbesondere Starten, eines geschalteten Reluktanzmotors, insbesondere in einem Haushaltgerät.

Auf dem Gebiet der elektrischen Antriebe sind die geschalteten Reluktanzmotoren (switched reluctance motor, SRM) bekannt, bei denen das Drehmoment im Rotor ausschließlich durch die Reluktanzkraft erzeugt wird. Daher müssen weder Stator noch Rotor eines Reluktanzmotors mit Permanentmagneten bestückt werden noch befinden sich am Rotor elektrische Wicklungen. Stattdessen besitzt der Rotor ausgeprägte Pole und besteht üblicherweise aus einem hochpermeablen, weichmagnetischen Material wie beispielsweise einem Elektroblech. Hierdurch können Reluktanzmotoren vergleichsweise günstig und einfach hergestellt werden. Auch entfallen prinzipbedingt jede Art von verschleißanfälligen Schleifringen und Bürsten, was Reluktanzmotoren eine vergleichsweise hohe Robustheit beschert.

Da der Läufer keine Wicklung trägt, fallen keine Stromwärmeverluste (Joulsche Verluste) an, wie das bei den bisher eingesetzten Asynchronmotoren prinzipiell der Fall ist. Dadurch kann der Wirkungsgrad des Synchron-Reluktanzmotors gegenüber dem Asynchronmotor gleicher Leistung ansteigen, was zu einer höheren Effizienz des Motors führt. Die fehlende Wärmeentwicklung im Läufer hat auch noch den Vorteil, dass sowohl die Lager als auch die Ständerwicklung kälter bleiben. Das erhöht die Lebensdauer der Lager und der Wicklungsisolation und reduziert Ausfallzeiten. Der Synchron-Reluktanzmotor hat auch im Teillastbereich sehr gute Wirkungsgrade.

Reluktanzmotoren werden üblicherweise mehrphasig bzw. mehrsträngig ausgeführt und besitzen eine unterschiedliche Anzahl ausgeprägter Zähne an Rotor und Stator. Die Statorzähne sind mit Spulen bewickelt, die abwechselnd ein- und ausgeschaltet bzw. mit pulsweitenmodulierten Spannungspulsen (PWM-Spannungspulsen) bestromt werden. Die Zähne mit den bestromten Wicklungen ziehen jeweils die nächstgelegenen Zähne des Rotors wie einen Elektromagneten an und werden abgeschaltet bzw. nicht bestromt, wenn oder kurz bevor die Zähne des Rotors den sie anziehenden Statorzähnen gegenüberstehen. In dieser Position wird die nächste Phase auf den in der Drehrichtung nächsten Statorzähnen eingeschaltet, so dass die Rotorzähne von den in der Drehrichtung nächsten Statorzähnen angezogen werden.

Um die Wicklungen der einzelnen Phasen zum richtigen Zeitpunkt umzuschalten bzw. zu bestromen, wird bei bekannten Lösungen ein Rotorlagegeber (Rotorlagesensor) vorgesehen, um die Lage des Rotors relativ zum Stator bestimmen zu können. Dies verursacht jedoch Aufwand und Kosten. Weiterhin kann der Lagesensor, der häufig als optisches System ausgeführt ist, leicht verschmutzen, was Störungen oder sogar einen Totalausfall des Motors verursachen kann. Gerade bei der Verwendung in potenziell schmutzbelasteten Umgebungen, wie etwa als Gebläsemotor in einem Staubsauger, kann der Lagesensor leicht verschmutzen und dann zum Ausfall des Motors führen.

Eine andere Alternative besteht darin, den Rotor vor dem eigentlichen Start in eine definierte Startposition zu bringen und erst dann den Motor zu starten. Der Nachteil hierbei besteht darin, dass diese initiale Ausrichtphase vergleichsweise lange dauern kann. Da aufgrund des fehlenden Lagesensors nicht bekannt ist, wie der Rotor anfänglich steht und wie lange der Rotor während der Ausrichtphase bzw. Einschwingphase braucht, bis er in der Ausrichtposition steht, wird üblicherweise eine ungünstigste bzw. maximale Zeitspanne ("worst case"-Betrachtung) für das Ausrichten angenommen. Insbesondere Motoren, die sehr reibungsarm gelagert sind, brauchen eine vergleichsweise sehr lange Zeitspanne, bis der Rotor in der Ausrichtposition steht und nicht mehr schwingt. Bei Lüftern mit großen Gebläserädern kann dies bis zu einigen Sekunden dauern.

Die lange Ausrichtphase bei sensorlosen Motoren stellt für den Bediener eine Totzeit dar, in der scheinbar nichts passiert. Von Benutzern eines Haushaltgeräts mit einem derartigen Motor wird dieses Verhalten nicht akzeptiert bzw. als nicht normal empfunden. Beispielsweise wird eine Dunstabzugshaube oder ein Sauger mit einem Gebläse eingeschaltet und erst nach einigen Sekunden bemerkt, dass das Gebläse hörbar/fühlbar losläuft. Die unvermeidliche Wartezeit bis zum Erreichen einer Betriebsbereitschaft des Geräts ist für den Benutzer unkomfortabel. Dies führt dazu, dass der Benutzer zumindest verärgert ist. Da es relativ lange dauert, bis beispielsweise bei einem Staubsauger durch das Arbeitsgeräusch das Laufen des Motors akustisch wahrnehmbar wird, kann beim Benutzer sogar der Eindruck eines Defekts entstehen. Dies führt im schlimmsten Fall sogar dazu, dass das Gerät reklamiert wird, da ein Defekt vermutet wird.

US 2016/072413 A1 offenbart ein Verfahren zum Starten eines geschalteten Reluktanzmotors, wobei die beiden Phasen des geschalteten Reluktanzmotors gleichzeitig mit Strom beaufschlagt und auch wieder gleichzeitig abgeschaltet werden, um über den Stromverlauf die Rotorposition des geschalteten Reluktanzmotors zu detektieren.

DE 690 16 794 T2 offenbart ein Verfahren zum Starten eines Reluktanzmotors, wobei die Reluktanz in den Magnetkreisen der Maschine bestimmt wird, dadurch wird eine Information über die absolute Position des Rotors in einem Reluktanzzyklus erhalten. Durch Bestimmen und Verarbeiten dieser Information gemäß dem Verfahren der Erfindung ist es möglich, immer den korrekten Phasenkreis auszuwählen, um maximale Drehung in eine gewünschte Richtung zu erhalten. Das Verfahren beruht auf der Tatsache, daß der Reluktanzzyklus in eine gegebene Anzahl von Zonen aufgeteilt werden kann, wobei in jeder Zone eine einzigartige Beziehung zwischen den betreffenden Reluktanzwerten der unterschiedlichen Phasen existiert. Zum Zwecke der Bestimmung, in welcher dieser Zonen der Rotor positioniert ist, werden die gemessenen Werte miteinander verglichen, um die Ordnung der Phasen nach der Größe der gemessenen Werte zu bestimmen.

EP 0 253 436 A1 offenbart ein Verfahren zum Starten eines Reluktanzmotors, wobei unabhängig von der Anfangslage des Rotors, ein erster Erregerstrom zugeführt wird, der so gesteuert wird, daß er während eines ersten vorgegebenen Zeitintervalls auf einen zweiten Wert ansteigt, für den mindestens ein Teil des Rotors und/oder des Stators gesättigt ist, über einen ersten Wert, für den keine Sättigung in dem Rotor und/oder dem Stator auftritt, während eines zweiten vorgegebenen Zeitintervalls auf mindestens dem zweiten Wert gehalten wird, um Sättigung in dem Rotor und/oder Stator aufrechtzuerhalten, und während eines weiteren vorgegebenen Zeitintervalls auf einen dritten Wert abnimmt, für den keine Sättigung in dem Rotor und/oder dem Stator auftritt, um den Rotor in oder in die Nähe einer der beiden stabilen Gleichgewichtslagen eines der genannten Paare zu bringen und den Rotor in dieser stabilen Gleichgewichtslage zu stabilisieren, und des anschließenden Zuführens eines impulsartigen zweiten Erregerstromes mit einem Wert, der größer ist als der zweite Wert des ersten Erregerstromes, zur Drehung des Rotors in Richtung der nächsten anderen der beiden stabilen Gleichgewichtslagen.

Der Erfindung stellt sich die Aufgabe, ein verbessertes Verfahren und eine verbesserte Ansteuereinheit für einen Reluktanzmotor zu schaffen, wobei auf einen Lagesensor verzichtet wird und dennoch ein möglichst schneller Anlauf des Motors ermöglicht wird.

Erfindungsgemäß wird diese Aufgabe durch ein Verfahren und eine Ansteuereinheit mit den Merkmalen der Hauptansprüche gelöst. Vorteilhafte Ausgestaltungen und Weiterbildungen der Erfindung ergeben sich aus den nachfolgenden Unteransprüchen.

Gemäß einem ersten Aspekt der Erfindung wird ein Verfahren zur Ansteuerung eines Reluktanzmotors mit einem Rotor mit einer Vorzugsrichtung im ausgerichteten Zustand und einem Stator mit zumindest zwei Phasen bereitgestellt, wobei das Verfahren die folgenden Schritte aufweist:
- Bestromen zumindest einer ersten Phase und einer zweiten Phase, um den Rotor an der ersten oder der zweiten Phase auszurichten;
- Erfassen der Induktivitätswerte der mindestens zwei Phasen, um die Phase mit dem höheren Induktivitätswert zu ermitteln;
- Bestromen nur der Phase mit dem erfassten kleineren Induktivitätswert, um eine Schwingung des Rotors um diese Phase zu erzeugen, und Erfassen eines ersten Verlaufs des Induktivitätswerts der anderen Phase; und
- Starten des Reluktanzmotors, wenn im Verlauf des Induktivitätswerts auf ein lokales Maximum ein weiteres lokales Maximum mit größerer Amplitude folgt.

In einem ersten Schritt werden mindestens zwei Phasen bestromt, so dass sich der Rotor an einer der Phasen ausrichtet. Bevorzugt werden die Phasen daher gleich bestromt. In nächsten Schritt wird erfasst, an welcher dieser Phasen der Rotor sich ausgerichtet hat. Eine vollständige Ausrichtung ist hierbei nicht erforderlich, d.h. es muss nicht abgewartet werden, bis der Rotor stationär ist. Dann werden die Induktivitätswerte an den zwei Phasen erfasst, wobei eine höhere Induktivität das Ausrichten an der betreffenden Phase anzeigt. Als nächstes wird nun nur die andere Phase bestromt, d.h. die Phase, an der sich der Rotor nicht ausgerichtet hat, und die deshalb die geringere Induktivität zeigt. Dies bewirkt, dass sich der Rotor zu dieser Phase dreht und eine Schwingung um diese Phase beginnt.

Bei der Schwingung ist zunächst unbekannt, wann der Rotor in welcher Drehrichtung schwingt. Es gilt daher herauszufinden, wann der Rotor in die beabsichtigte Drehrichtung schwingt, und erst dann den Motor zu starten. Erfindungsgemäß erfolgt dies so, dass ein erster Verlauf des Induktivitätswerts der anderen bzw. nicht drehmomentbildenden Phase erfasst wird.

Aufgrund der Tatsache, dass der Rotor eine Vorzugsrichtung aufweist, ist die Induktivität dann am höchsten, wenn der Rotor diese Vorzugsrichtung, beispielsweise 10° gegenüber der Phase, einnimmt. In einer umgekehrten Ausrichtung ist die Induktivität demgegenüber niedriger, weist jedoch ebenfalls ein lokales Maximum auf. Aus dem Verlauf des Induktivitätswerts kann daher dann auf die richtige Drehrichtung geschlossen werden, wenn auf ein lokales Maximum (Überschwingen in der "falschen" Drehrichtung) ein weiteres lokales Maximum (Überschwingen in der "richtigen" Drehrichtung) mit höherer Amplitude folgt. Da der Rotor sich dann in der richtigen Drehrichtung bewegt, kann der Motor gestartet werden. Er läuft in der richtigen, durch die Vorzugsrichtung gegebenen Richtung an.

Dem erfindungsgemäßen Verfahren kann eine Erkennung vorausgehen, ob der Motor noch dreht. Sofern dies der Fall ist, kann die Ansteuerung des Motors auf eine bekannte Weise erfolgen, da ein Starten nicht erforderlich ist.

Gemäß einer Ausführungsform wird die Induktivität erfasst, indem die Phase mit einem oder mehreren Spannungspulsen beaufschlagt und der entsprechende Strom in der Phase gemessen wird, wobei die Amplitude des Stroms antiproportional zur Induktivität ist.

Gemäß einer Ausführungsform ist der Rotor asymmetrisch geformt, um die Vorzugsrichtung im ausgerichteten Zustand zu erzielen. Beispielsweise kann der Rotor an einer von vier Ecken eine Aussparung in Form einer Nut, Abschrägung etc. aufweisen. Möglich ist auch eine asymmetrische Materialverteilung bzw. eine Asymmetrie in den Materialeigenschaften.

Gemäß einer Ausführungsform sind die mindestens zwei Phasen senkrecht zueinander ausgerichtet, und das Verfahren umfasst weiter:
Erfassen eines zweiten Verlaufs des Induktivitätswerts der Phase, um die der Rotor schwingt;
wobei lokale Minima im zweiten Verlauf beim Bestimmen der lokalen Maxima der Induktivität berücksichtigt werden.

Hiermit kann ein Aufsynchronisieren auf die Frequenz der Schwingung des Rotors erfolgen, um die Positionen erfasster Maxima in der betreffenden Phase zu plausibilisieren. Bei senkrecht ausgerichteten Phasen ist jeweils die Induktivität an einer Phase dann maximal bzw. minimal, wenn die Induktivität an der anderen Phase minimal bzw. maximal ist. Ein Extremwert in der Induktivität einer der Phasen muss daher immer von einem entgegengesetzten Extremwert in der anderen Phase begleitet werden. Unter Verwendung dieser Relation kann die Zuverlässigkeit der Erfassung von Maxima daher verbessert werden, indem auch für die drehmomentbildende Phase ein Verlauf des Induktivitätswerts erfasst wird.

Gemäß einer Ausführungsform wird die Frequenz der Schwingung des Rotors um eine Phase, die sich aus dem angelegten Strom und der bekannten Massenträgheit des Rotors ergibt, beim Bestimmen der lokalen Maxima der Induktivität berücksichtigt.

Die Frequenz der Schwingung ergibt sich aus der bekannten Massenträgheit des Rotors und dem ebenfalls bekannten angelegten Strom. Es ist daher möglich, aus der Frequenz darauf zu schließen, an welchen Positionen Extremwerte der Induktivität auftreten sollten. Unter Verwendung dieser Information kann die Zuverlässigkeit der Erfassung von Maxima und/oder Minima daher verbessert werden.

Gemäß einer Ausführungsform beginnt das Erfassen des ersten und/oder zweiten Verlaufs des Induktivitätswerts erst nach einer Einschwingphase des Rotors, wobei die Einschwingphase mindestens ein vorgegebenes Zeitintervall und/oder eine vorgegebene Anzahl von Schwingungen des Rotors und/oder eine vorgegebene Anzahl von Extremwerten im Verlauf des Induktivitätswerts umfasst.

Da während des Einschwingvorgangs möglicherweise noch kein erwartbares Verhalten vorliegt, beispielsweise die Schwingfrequenz noch nicht eingehalten wird, wird gemäß dieser Ausführungsform abgewartet, bis der Rotor sich eingeschwungen hat. Dazu kann eine Zeitverzögerung, eine Anzahl von Schwingungen/Extremwerten des Induktivitätswerts oder eine Kombination davon verwendet werden.

Gemäß einer Ausführungsform wird das Verfahren abgebrochen und neu begonnen, falls anhand des ersten oder zweiten Verlaufs des Induktivitätswerts erkannt wird, dass keine Schwingung des Rotors angeregt wurde.

Bei dem erfindungsgemäßen Verfahren ist es prinzipiell möglich, dass (insbesondere bei schwergängigen Motoren) zum Zeitpunkt des Bestromens nur der Phase mit dem erfassten kleineren Induktivitätswert, um eine Schwingung des Rotors um diese Phase zu erzeugen, der Rotor stattdessen in einer grenzstabilen Position verharrt. Dies würde sich beispielsweise darin zeigen, dass der Verlauf des Induktivitätswerts keinen ausgeprägten Schwingungsverlauf aufweist, sondern im Wesentlichen konstant ist. Tritt dieser Fall auf, wird das ganze Verfahren abgebrochen und beginnend mit dem Bestromen der zwei Phasen neu durchlaufen, da hier kein Anlaufen auf die erfindungsgemäße Weise möglich ist. Erkannt werden kann dieser Fall beispielsweise daran, dass nach Beginn des Bestromens der Phase nach einer vorgebbaren Zeitdauer keine ausreichende Änderung des Induktivitäts- bzw. Stromwerts vorliegt.

Gemäß einem weiteren Aspekt wird eine Ansteuerungseinheit zur Ansteuerung eines Reluktanzmotors bereitgestellt, wobei die Ansteuerungseinheit Einheiten aufweist, die ausgebildet sind, um die Schritte des Verfahrens gemäß einem der vorangegangenen Ansprüche auszuführen und/oder anzusteuern. Die Ansteuerungseinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Gemäß weiteren Aspekten werden ein geschalteter Reluktanzmotor mit einer vorstehenden Ansteuerungseinheit sowie ein Haushaltgerät, insbesondere Staubsauger, mit einem derartigen Reluktanzmotor bereitgestellt. Der Reluktanzmotor weist einen Rotor mit einer Vorzugsrichtung im ausgerichteten Zustand und einem Stator mit zumindest zwei Phasen auf. Der Rotor ist bevorzugt asymmetrisch geformt ist, um die Vorzugsrichtung im ausgerichteten Zustand zu erzielen. Weiterhin weist der Reluktanzmotor keinen Rotorlagegeber auf.

Auch wenn der beschriebene Ansatz anhand eines Haushaltgeräts beschrieben wird, kann die hier beschrieben Ansteuereinheit bzw. das hier vorgestellte Verfahren entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Schnittbilddarstellung der beiden Poolpaare sowie des Rotors;
- Figur 2: eine schematische Darstellung der Rotorposition in einem ersten Stadium des erfindungsgemäßen Verfahrens;
- Figur 3: eine schematische Darstellung der Rotorposition in einem zweiten Stadium des erfindungsgemäßen Verfahrens;
- Figur 4: eine schematische Darstellung der Rotorposition in einem dritten Stadium des erfindungsgemäßen Verfahrens;
- Figur 5: eine schematische Diagramm-Darstellung der Strom- oder Rotorwinkelwerte für Zustände oder Stadien während des gesamten Anlaufs des Reluktanzmotors;
- Figur 6: einen Detailausschnitt der Diagramme aus der Figur 5;
- Figur 7: einen Detailausschnitt der Stromfluss-Diagramme aus der Figur 5;
- Figur 8: einen Detailausschnitt der Diagramme aus der Figur 5; und
- Figur 9: einen Detailausschnitt des Diagramms von Figur 8 mit vertikaler Überhöhung.

Es ist anzumerken, dass im Folgenden bei einigen Figuren eine Winkelstellung des Rotors gezeigt ist, die mit einem Rotorlagegeber ermittelt wurde. Dies dient lediglich der Veranschaulichung der Erfindung, da die Erfindung Motoren betrifft, die keinen Lagegeber aufweisen. Bei Ausführungsformen der Erfindung kommt somit kein Lagegeber zum Einsatz.

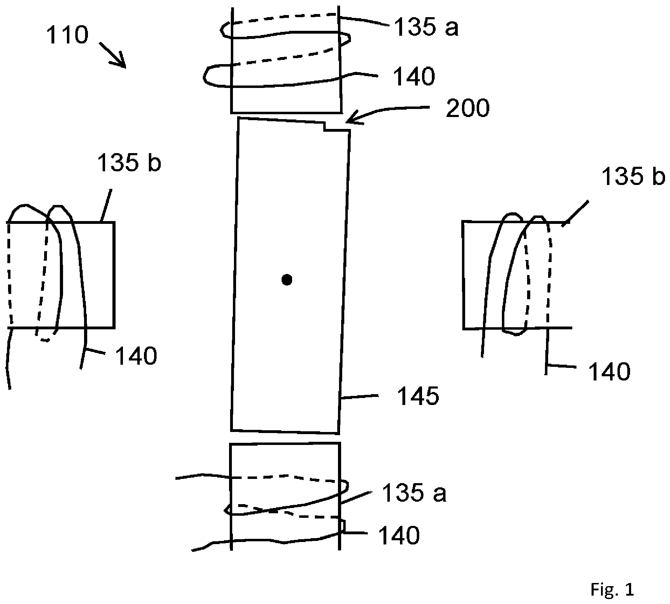

Figur 1 zeigt eine schematische Schnittbilddarstellung eines Reluktanzmotors. Der Reluktanzmotor 110 weist zwei Phasen 135a und 135b mit je gegenüberliegenden Polen auf, wobei jeder Pol der Phasen 135a und 135b von einer Spule 140 umgeben ist. Die Spulen gegenüberliegender Pole sind bevorzugt miteinander verbunden und werden bei Bestromung der Phase somit gleichzeitig bestromt.

Zwischen den Polen der Phasen 135a bzw. 135b ist der Rotor 145 des Reluktanzmotors 110 drehbar gelagert. Die Darstellung in der Figur 1 mit nur zwei Phasen 135a und 135b ist hier auch aus darstellungstechnischen Gründen gewählt worden, es können selbstverständlich auch mehr Phasen als die beiden in der Figur 1 dargestellten beiden Phasen 135a und 135b im Reluktanzmotor 110 vorhanden sein, auch die Winkelstellung der Phasen zueinander kann von 90° abweichen. Die in der Figur 1 nur schematisch dargestellten Spulen 140 um die Pole der Phasen 135a und 135b werden von einer Ansteuereinheit bestromt.

In der Ansteuereinheit ist für diesen Zweck eine Einheit zum Bestromen vorgesehen, die diese Bestromung in Zeitpunkt und Stromstärke überwacht und ausführt. Zusätzlich ist in der Ansteuereinheit eine Einheit zum Erfassen von einem oder mehreren Induktionswerten vorhanden, wobei diese Einheit zum Erfassen gemäß der nachfolgend noch näher beschriebenen Vorgehensweise eine Verbindung zu den Spulen 140 um die Pole der Phasen 135a bzw. 135b aufweist. Durch das Anlegen eines Spannungspulses an die jeweilige Phase kann als Antwort ein Stromfluss durch diese Spulen 140 erreicht und erfasst werden, woraus wiederum die Induktivität an einer der Phasen 135a bzw. 135b erfassbar wird, die selbst wiederum einen Hinweis auf die Lage des Rotors zwischen den Polen der Phasen 135a bzw. 135b gibt.

Erkennbar ist eine Nutung 200 am Rotor 145, die dafür sorgt, dass die Induktivität nicht in der parallelen (bzw. symmetrischen) Ausrichtung von Rotor und Phase am höchsten ist, sondern in einer davon abweichenden Vorzugsrichtung. Die Rotornutung 200 hat somit Auswirkung auf die Induktivität, die sich jeweils aus Sicht der Spulen 140 um die erste Phase 135a (Phase 1) bzw. die zweite Phase 135b (Phase 2) ergibt. Das Prinzip des Reluktanzmotors beruht darauf, dass der Rotor bestrebt ist, die Stellung mit der jeweils höchstens Induktivität einzunehmen, was wiederum der niedrigsten Reluktanz entspricht. Durch die Nutung 200 wird bewirkt, dass diese Stellung einer schrägen Ausrichtung des Rotors an einer Phase entspricht, beispielsweise 10°. Ist der Rotor 145 im Wesentlichen stationär in dieser Vorzugsrichtung ausgerichtet, kann der Reluktanzmotor gestartet werden, da er sicher in der richtigen Rotationsrichtung, in dem hier gezeigten Beispiel im Uhrzeigersinn, anlaufen wird. Die mindestens im Wesentlichen stationäre Ausrichtung benötigt jedoch eine vergleichsweise lange Zeit.

Die Nutung ist nur ein mögliches Beispiel, um den Rotor mit einer Vorzugsrichtung zu versehen. Denkbar sind auch andere geometrische Ausführungen bis hin zur Verwendung verschiedener Materialien/Materialstärken/Materialeigenschaften, solange damit erreicht wird, dass die Reluktanz in der Vorzugsrichtung ein Minimum einnimmt (bzw. die Induktivität ein Maximum).

In bisherigen Ansätzen wurde der Rotor 145 mittels Ansteuerung einer bzw. beider Phasen bzw. Spulen der Phasen 135a bzw. 135b ausgerichtet. Es kommt zu einer mechanischen Schwingung des Rotors 145, die sehr lange (bis zu 2,5 s) andauert. Schließlich richtet sich der Rotor 145 aus. Bedingt durch die Nutung 200 im Rotor 145 erfolgt die Ausrichtung ca. 10 Grad winkelversetzt zu einer bestromten Phase (in dem in der Fig. 1 dargestellten Beispiel die Phase 135a). Dadurch ist eine Vorzugsrichtung gegeben bei der darauffolgenden Ansteuerung bzw. Bestromung der Spulen um die Pole der nächsten Phase bzw. der zweiten Phase 135b.

Ist zum Zeitpunkt der Umschaltung in Phase 2 bzw. die Spulen der Pole der zweiten Phase 135b die Schwingung des Rotors 145 noch nicht ausreichend abgeklungen, d.h. der Rotor nicht zumindest im Wesentlichen stationär, kann der Reluktanzmotor 110 schlimmstenfalls in der falschen Drehrichtung anlaufen. Dieser Betriebsfall sollte in jedem Fall gemieden werden. Um sicherzustellen, dass der Rotor 145 richtig ausgerichtet ist, muss daher solange abgewartet werden, bis dies unter allen Umständen erfolgt ist. Dadurch verlängert sich das Anlaufen jedoch in inakzeptabler Weise. Der hier beschriebene Ansatz ermöglicht einen deutlich schnelleren Anlauf. Dadurch kann auf die lange Ausrichtphase verzichtet werden. Anstatt auszurichten, wird der Rotor 145 gezielt zur Schwingung angeregt.

Durch entsprechende Ansteuerung soll erreicht werden, dass der Rotor 145 mit definierter Frequenz schwingt, wobei zeitgleich eine oder beide Phasen genutzt werden, um die aktuelle Position der Rotornutung 200 zu erkennen. Bewegt sich die Rotornutung 200 bzw. der Rotor 145 in die gewünschte Richtung, kann der SRM bzw. Reluktanzmotor 110 gestartet werden.

Dabei werden beispielsweise folgende Phasen oder Stadien eines Anlaufzyklus des Reluktanzmotors durchlaufen:
Phase 1 (S1): Bestromen beider Phasen, um ein Ausrichten an einer Phase anzuregen (beispielsweise 80 ms)
Phase 2 (S2): Messung der Induktivitäten (beispielsweise 0,25 ms) beider Phasen
Phase 3 (S3): Anregung des Rotors durch Umschaltung in unausgerichtete Phase
Phase 4 (S4): Erkennung der Vorzugsrichtung während der Rotorschwingung (ca. 100 ms - 200 ms)

Die genannten Phasen bzw. Stadien werden nachfolgend dargestellt.

In Schritt S1 werden beide Phasen gleichmäßig bestromt. Zu diesem Zeitpunkt ist unbekannt, welche Position der Rotor einnimmt, ob er steht oder noch rotiert. Eine beispielhafte Dauer ist mindestens 80 Millisekunden. In Schritt S2 wird eine Messung der Induktivitäten beider Phasen vorgenommen, wie vorstehend beschrieben kann dies durch Spannungspulse und die sich ergebenden Ströme erfolgen, wobei die Induktivität umgekehrt proportional zum Strom ist.

In diesem Schritt S2 kann auch erkannt werden, ob der Rotor noch rotiert. Dazu muss über einen Zeitraum der Verlauf der Induktivitäten (mittels des Verlaufs bzw. der "Welligkeit" des Stromes) bestimmt werden. Aus dem Muster ergibt sich dann die Information, ob der Rotor noch rotiert. In diesem Fall kann zu einer normalen Ansteuerung im Betriebsfall übergegangen werden, alternativ kann abgewartet werden, bis die Rotation in eine Schwingung um eine Phase übergeht.

Ist der Rotor im Schritt S1 bereits an einer Phase ausgerichtet, erfolgt durch diese Ansteuerung keine Schwingung, der Rotor bleibt stationär. Schwingt der Rotor jedoch durch die Ansteuerung von Schritt S1 um eine Phase, bedeutet dies, dass er bestrebt ist, sich an dieser Phase auszurichten. Auch wenn der Rotor noch schwingt, wird daher im Folgenden hier ebenfalls von der "ausgerichteten Phase" gesprochen, im Gegensatz zur "unausgerichteten Phase". Erkennbar ist die ausgerichtete Phase durch die höhere Induktivität dieser Phase gegenüber der unausgerichteten Phase.

In Schritt S3 wird nur die unausgerichtete Phase bestromt (und die Bestromung der ausgerichteten Phase beendet), um den Rotor anzuregen, sich zu dieser Phase zu drehen und eine Schwingung um diese Phase zu beginnen. Im Falle von zwei senkrecht ausgerichteten Phasen wird hierdurch bewirkt, dass die Schwingung einen möglichst großen Winkelbereich überstreicht, um das Signal/Rauschverhältnis zu verbessern.

Grundsätzlich wäre es auch möglich, bereits bei Erkennen (in Schritt S2) einer Schwingung um eine Phase den Schritt S3 zu überspringen. Allerdings wird die Amplitude der Schwingung dann möglicherweise zu gering sein, um das Verfahren sicher durchführen zu können. Es wäre daher weiter denkbar, dies in Schritt S2 zu erkennen und nur bei Vorliegen einer ausreichenden Amplitude den Schritt S3 zu überspringen.

In jedem Fall ist vor Schritt S4 eine Schwingung um eine definierte Phase erzeugt worden (wird in diesem Schritt erkannt, dass keine Schwingung erzeugt wurde, kann das Verfahren abgebrochen und neu gestartet werden). Gemäß der Erfindung wird in diesem Schritt erkannt, in welcher Hälfte der Schwingung sich der Rotor befindet bzw. welche Rotationsrichtung er dabei gerade innehat. D.h., es wird erkannt, wann sich der Rotor in der gewünschten Anlaufrichtung bewegt (in der vorliegenden Beschreibung beispielhaft der Uhrzeigersinn). Bei einem Rotor ohne Vorzugsrichtung wäre dies nicht möglich, da dann auch die Verläufe der Induktivität symmetrisch sind und somit keine Information über die Rotorbewegung zulassen. Aufgrund der Verwendung eines entsprechend ausgebildeten Rotors ist dies bei der Erfindung jedoch möglich, da die Induktivität in der Vorzugsrichtung (beispielsweise 10°) ein lokales Maximum und in der etwa gespiegelten Position (hier dann beispielsweise -10°) ein weiteres, aber kleineres lokales Maximum aufweist.

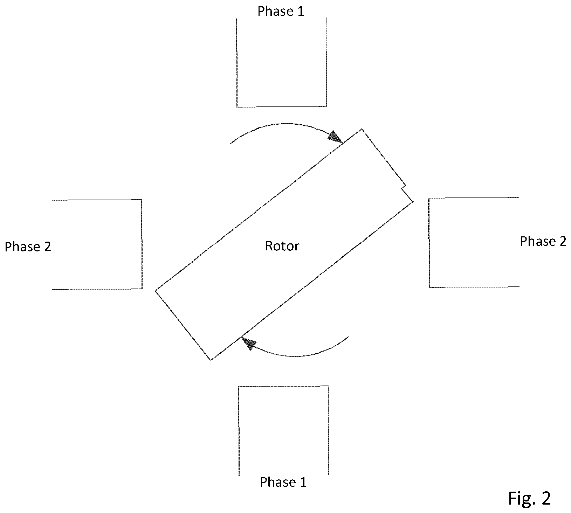

Figur 2 zeigt schematisch die Rotorposition zu Beginn des erfindungsgemäßen Ansteuerungsverfahrens. Der Motor wird in diesem Moment nicht angetrieben, d.h. die Phasen 1 und 2 sind nicht bestromt. Der Rotor kann hier zwei mögliche Zustände einnehmen, eine Rotation oder ein Stillstehen. Durch Pfeile ist hier der Fall angedeutet, dass der Rotor noch (hier im Uhrzeigersinn) rotiert. Es ist ebenfalls möglich, dass der Rotor bereits steht, beispielsweise in der hier gezeigten Stellung.

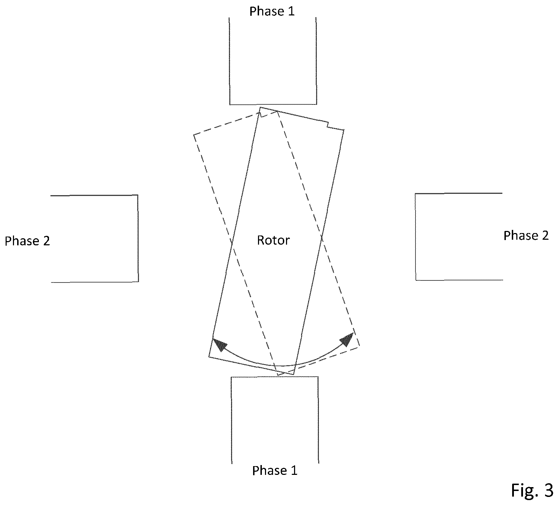

Figur 3 zeigt schematisch die Rotorposition, nachdem alle Phasen gleichmäßig bestromt wurden. Der Rotor wird dadurch bestrebt sein, sich an einer der Phasen ausrichten. Im Falle, dass der Rotor zuvor noch rotierte, stellt dies eine Bremsphase dar. Der Rotor wird eine Schwingung um eine der Phasen (daher "ausgerichtete Phase") aufnehmen, hier durch die gestrichelte Position und die Bewegungspfeile angedeutet.

Bei schwergängigen Rotoren kann es unter bestimmten Bedingungen dazu kommen, dass hier keine Ausrichtung erfolgt. Das würde etwa im Falle passieren, indem die Reluktanz bezüglich beider Phasen im Wesentlichen gleich wäre oder zumindest die Differenz der Reluktanz nicht ausreicht, um die Trägheit/den Reibungswiderstand des Rotors zu überwinden und ihn zur Drehung anzuregen. Wird ein solcher Fall erkannt, wird das Verfahren abgebrochen und neu gestartet.

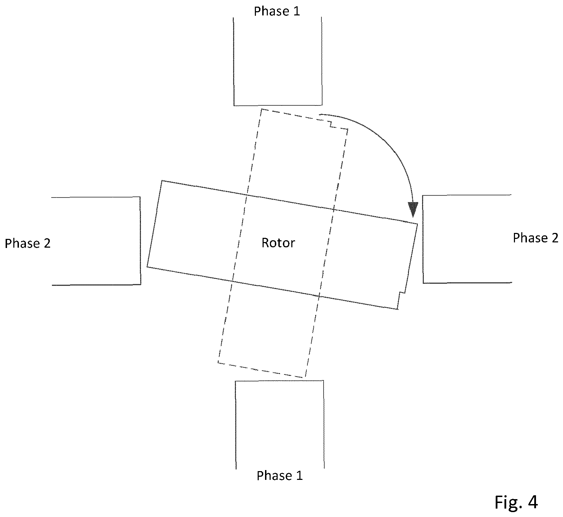

Figur 4 zeigt schematisch die Rotorposition, nachdem auf die unausgerichtete Phase (hier Phase 2) umgeschaltet wurde. Der Rotor wird sich dadurch aus der "ausgerichteten Phase" (hier Phase 1, gestrichelte Position) in Richtung auf die Phase 2 drehen (nicht zwingend wie hier gezeigt im Uhrzeigersinn). Er wird dann eine Schwingung um diese Phase (hier Phase 2) beginnen, analog zu dem Zustand von Figur 3. Während dieser Schwingung führt der Rotor abwechselnd zwei Teilbewegungen aus, einerseits eine Drehung in der Vorzugsrichtung und andererseits eine Drehung entgegengesetzt zu der Vorzugsrichtung.

Erfindungsgemäß kann erkannt werden, in welcher Teilbewegung sich der Rotor befindet. Entspricht die Drehrichtung der gewünschten Anlaufrichtung, kann der Reluktanzmotor gestartet werden. Hierbei entfällt die lange Wartezeit, bis sich der Rotor stationär in seiner Vorzugsrichtung ausgerichtet hat.

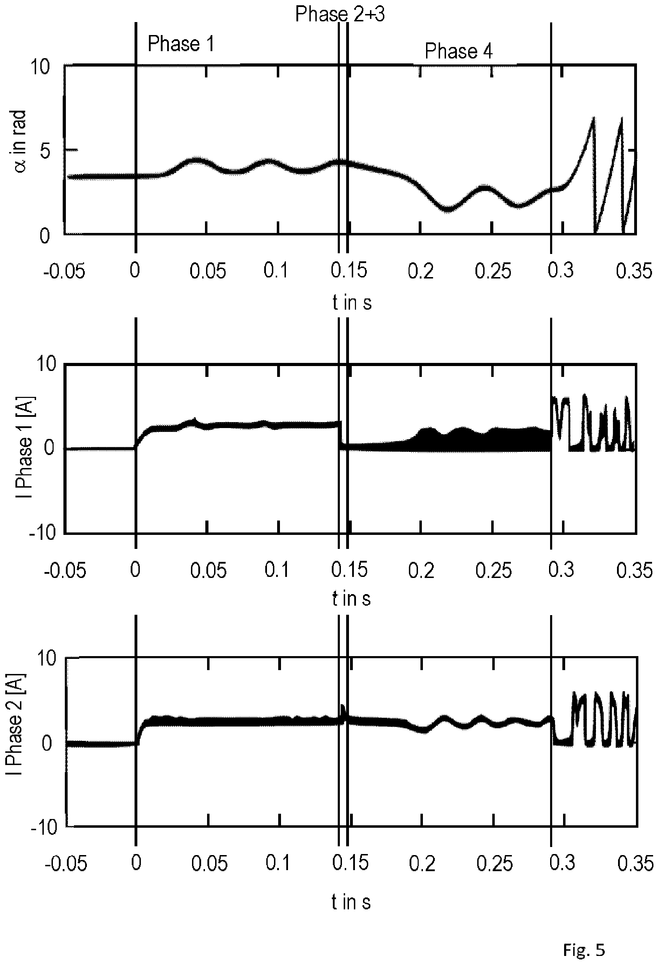

Figur 5 zeigt in einer schematischen Diagramm-Darstellung Strom- oder Rotorwinkeiwerte für Zustände oder Stadien während des gesamten Anlaufs des Reluktanzmotors 110, d. h., es sind alle Schritte bzw. Stadien des Anlaufs des Reluktanzmotors 110 dargestellt. In der Figur 5 sind hierbei der Rotorwinkel α in rad über die Zeit (oberes Teildiagramm) sowie die Ströme durch die Pole der ersten Phase 135a (mittleres Teildiagramm) und die Ströme durch die Pole der zweiten Phase 135b (unteres Teildiagramm) in Ampere über die Zeit t dargestellt. Ferner sind die einzelnen Zeitintervalle angegeben, in denen die Schritte S1 bis S4 ausgeführt werden.

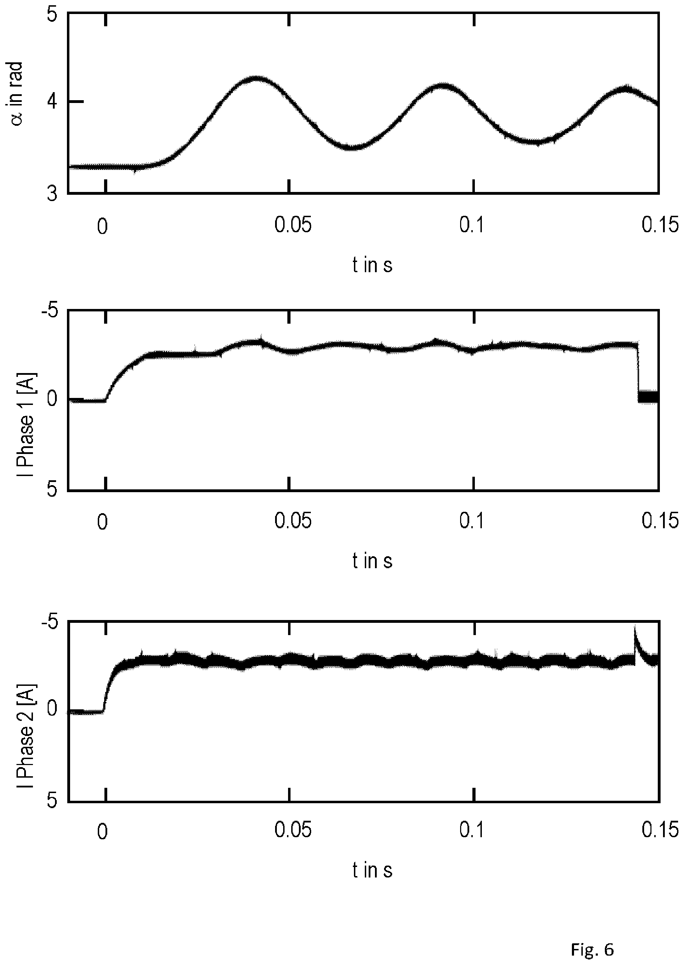

Figur 6 zeigt einen Detailausschnitt der Diagramme aus der Figur 5, in der der Rotorwinkel und die Ströme durch die Pole der Spulen im Stadium 1 näher abgebildet sind. Dieses Stadium betrifft den Zustand des Ausrichtens bzw. Bremsens und Erkennens einer Rotordrehung des Rotors 145. Während der Ausricht- bzw. Bremsphase wird erkannt, ober der Rotor 145 noch dreht, schwingt oder steht, anhand des sich einstellenden Stromes.

Zur Erkennung, ob der Rotor steht oder zwar noch schwingt, aber nicht mehr rotiert, erfolgt eine Messung der Induktivitäten in beiden Phasen bzw. Spulen 140 um die Pole der Phase 135a und 135b. Dazu wird ein definierter Spannungspuls nacheinander (d.h. um ein vorgebbares Zeitintervall versetzt) auf jede der beiden Phasen 135a und 135b gegeben. Über den sich ergebenden Stromanstieg ist ein Rückschluss auf die Induktivität der Phasen 135a und 135b möglich. Da die Messzeit bei diesem Verfahren sehr kurz ist, wirkt sich einerseits die Rotorschwingung nicht auf das Messergebnis aus. Andererseits wirkt der kurze Messimpuls sich nicht auf die Rotorschwingung aus.

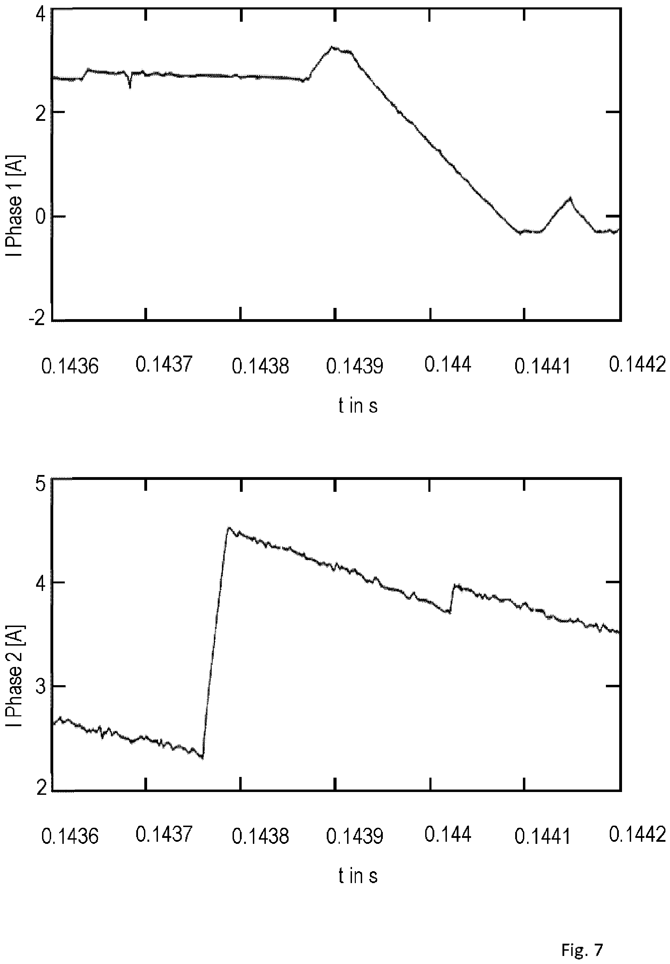

Figur 7 zeigt einen Detailausschnitt der Stromfluss-Diagramme aus der Figur 5, in der der Rotorwinkel und die Ströme durch die Phasen in Schritt S2 und S3 näher abgebildet sind. In dem Stadium 2 wird hierbei eine Messung der vorstehend genannten Induktivitäten durchgeführt und in dem Schritt 3 erfolgt eine Anregung des Rotors 145 durch Bestromen nur derjenigen Phase 135b, zu welcher der Rotor 145 nicht ausgerichtet ist (unausgerichtete Phase). Um den Rotor 145 anzuregen, wird somit nach Messung der Induktivität diejenige Phase mit Strom beaufschlagt, die eine niedrigere Induktivität (einen höheren Strom) aufweist. Dadurch kommt es zu einer Drehung des Rotors 145 zur anderen Phase, d.h. hier der zweiten Phase 2 bzw. 135b. Auf diese Weise ergibt sich eine Schwingung um diese Phase, d.h. um die Pole der zweiten Phase 2 bzw. 135b.

Die zur Drehmomentbildung nicht mehr benötigte Phase (hier beispielsweise die Spulen um die erste Phase 135a) wird nach der Bestromung der zweiten Phase 135b mit kurzen Spannungspulsen beaufschlagt. Die Spannung sollte einerseits groß genug sein, um ein Messsignal mit ausreichend hohem Signal-Rauschabstand zur Verfügung zu stellen, andererseits soll ein Einfluss auf das Drehmoment vermieden werden. Um eine Drehmomentbildung in dieser Phase (d.h. den Stromfluss durch die erste Phase 135a) zu vermeiden, wird des Weiteren kein Freilauf verwendet, dadurch wird der Strom schnell abgebaut und die Strom-Zeit-Fläche signifikant verringert. Es entstehen einzelne Strompeaks, deren Amplitude antiproportional zur Induktivität ist, sodass aus diesen Strompulsen (unter Verwendung des bekannten Zusammenhangs zwischen den erfassten Strompulsen und der Induktivität der jeweiligen Phase 135a, 135b) die entsprechenden Induktivitätswerte erfasst werden können.

Im vorstehenden Beispiel wird also nur die Phase 2 bzw. 135b mit signifikanter Strom-Zeit-Fläche bestromt, während die andere Phase 1 bzw. 135a mit kurzen Impulsen beaufschlagt wird. Letzteres wird verwendet, um anhand der Induktivitätsänderung die Drehung um Phase 2 bzw. 135b zu erfassen.

Um zu erkennen, wann der Rotor 145 ausgelenkt ist, wurde der Strom in (in diesem Beispiel Phase 1 bzw. die Spulen 140 um die Pole der ersten Phase 135a) herangezogen: In ausgerichteter Position (d.h., wenn sich der Rotor 145 an der Phase 135a befindet) bzw. bei größter Annäherung während der Schwingung weist der Strom in diesen Spulen 140 der Phase 135a ein Minimum auf. In ausgelenkter (d.h., nicht ausgerichteter) Position bzw. bei größter Entfernung während der Schwingung weist der Strom 140 in diesen Spulen der Phase 135a dagegen ein Maximum auf. Somit dient der Strom in Phase 1 bzw. an den Spulen 140 um die Pole der ersten Phase 135a) zur Synchronisation auf die Rotorschwingung des Rotors 145.

Aufgrund dieser Messung des Induktivitätsverlaufs der nicht drehmomentbildenden Phase erfolgt die Erkennung der Rotorposition und -Drehrichtung. Die Kenntnis der ungefähren Rotorfrequenz ermöglicht ein schnelles und zuverlässiges Aufsynchronisieren. Die Frequenz der Rotorschwingung wird im Wesentlichen definiert durch den eingeprägten Strom und die Massenträgheit des Rotors 145. Aufgrund der Tatsache, dass beide Einflussgrößen vorteilhafterweise bekannt sind, ist eine Rotorschwingung des Rotors 145 mit relativ genau definierter Frequenz möglich. Das erleichtert das Auffinden von Extremwerten der Induktivität und/oder ermöglicht eine Plausibilisierung gefundener Extremwerte, da diese entsprechend der Rotorfrequenz auftreten sollten.

Die Erkennung, ob der Rotor während seiner Schwingung in Anlaufrichtung dreht oder nicht, wird für das genannte Beispiel an der Phase 135a durchgeführt. Der Rotor schwingt hin und her zwischen zwei Extrempositionen: einerseits einer Position, die qualitativ seiner Vorzugsrichtung entspricht, und andererseits einer dazu spiegelbildlichen Position. Der Rotor passiert dabei jeweils die Phase 135b (bzw. die dazu parallele Position), schwingt dann über die Vorzugsposition bzw. deren Gegenteil hinaus und kehrt dann in umgekehrter Richtung zurück.

Da zu Beginn der Rotorschwingung ein Einschwingvorgang feststellbar ist, wird der Einschwingvorgang bevorzugt nicht zur Bewertung herangezogen. In diesem Beispiel beginnt erst ab dem zweiten Extremwert die Auswertung, alternativ sind auch mehrere Extremwerte, ein oder mehrere Perioden der Rotorschwingung oder ein festgelegtes Zeitintervall möglich, um die Einschwingzeit auszuschließen.

Wird nun in Phase 1 bzw. 135a ein lokales Minimum im Stromverlauf erfasst, auf das ein weiteres lokales Minimum im Stromverlauf mit niedrigerem Wert folgt, so bedeutet dies, dass der Rotor zuerst entgegen der Anlaufrichtung über die Phase 2 hinausgeschwungen ist und danach in der Anlaufrichtung über die Phase 2 hinaus zurückgeschwungen ist. Damit hat der Rotor unmittelbar zuvor seine Vorzugsposition eingenommen, während er gleichzeitig in der richtigen Richtung rotiert. Zu diesem Zeitpunkt kann der Reluktanzmotor somit gestartet werden, beginnend mit der Bestromung von in diesem Beispiel der Phase 1 bzw. 135a.

Zur Verbesserung kann wie vorstehend bereits erwähnt, optional auch der Stromverlauf in Phase 2 bzw. 135b herangezogen werden. Dazu macht man sich zunutze, dass Strommaxima bzw. -Minima in verschiedenen Phasen immer in bestimmten Positionen auftreten müssen. In einer einfachen Variante, in der zwei Phasen senkrecht zueinander ausgerichtet sind, treten Maxima in einer Phase beispielsweise immer zeitgleich mit Minima in der anderen Phase auf. Bei anderen Relationen von zwei Phasen kann ein anderer Phasenversatz hinzukommen. Ferner treten die Extremwerte stets abhängig von der Rotorfrequenz der jeweiligen Schwingung auf, die wiederum aus bekannten Parametern des Reluktanzmotors ableitbar ist.

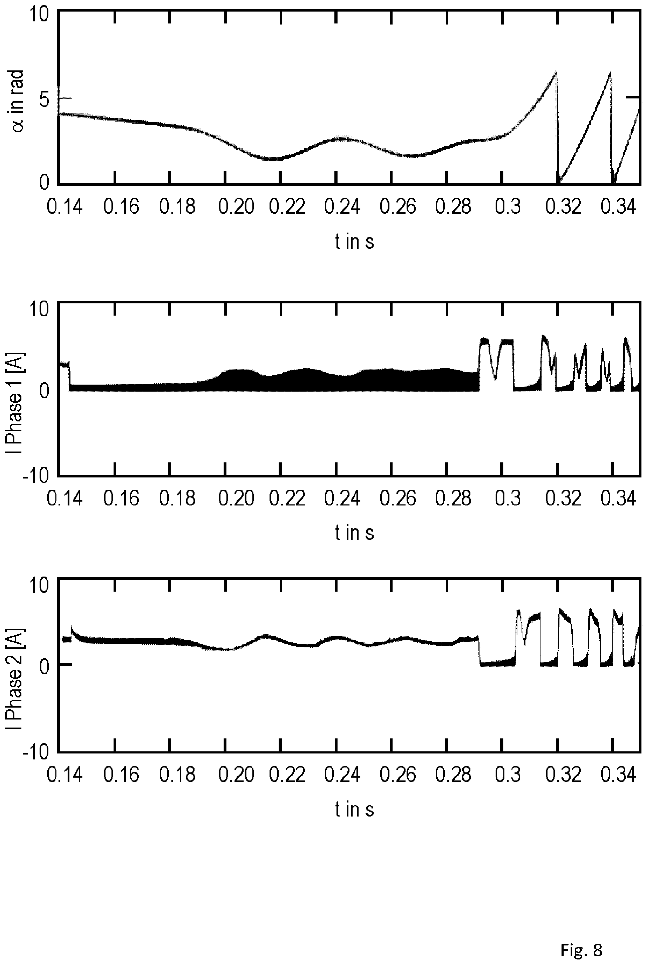

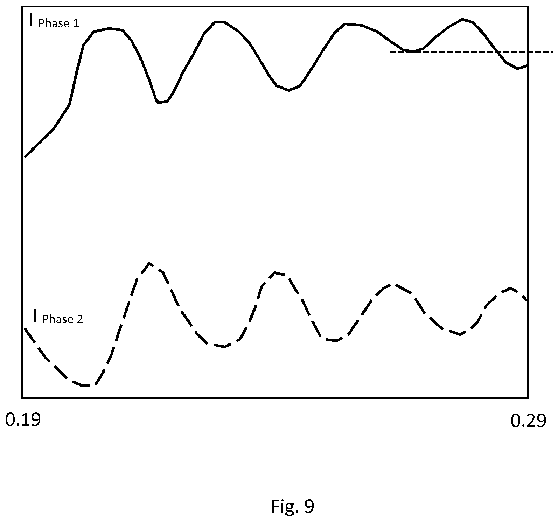

Wenn wie vorstehend in Phase 1 ein Minimum im Stromverlauf auftritt, muss in dem hier genannten Beispiel zweier senkrechter Phasen zeitgleich in Phase 2 ein Maximum auftreten. Oder mit anderen Worten: Ist in Phase 2 eine "Spitze" im Stromverlauf vorhanden und zeitgleich in Phase 1 ein "Tal" im Stromverlauf, das tiefer als vorherige "Tal" im Stromverlauf ist, kann der Reluktanzmotor gestartet werden (in diesem Beispiel wird dies in dem Diagramm aus Fig. 8 und 9 im unteren Diagramm nach dem vierten Maximum im Stromverlauf erkennbar).

Figur 8 zeigt einen Detailausschnitt der Diagramme aus der Figur 5, in dem der Rotorwinkel und die Ströme durch die Pole der Spulen im Stadium 4 näher abgebildet sind. Hierbei wird eine Erkennung der Vorzugsrichtung des Rotors 145 während einer Rotorschwingung abgebildet.

Figur 9 stellt einen Teil der Verläufe der Ströme in Phase 1 und Phase 2 aus Figur 8 (von Zeitpunkt 0.19 bis 0.29) und zur besseren Erkennbarkeit in vertikaler Richtung überhöht dar. Wie hier zu sehen, folgt auf das dritte Minimum im Strom I_{Phase 1} ein weiteres Minimum mit noch kleinerer Amplitude. Etwa gleichzeitig weist der Strom I_{Phase 2} jeweils Maxima auf.

Um den Einfluss von Temperatur / Alterung / Serienstreuung und anderen Größen zu vermeiden, kann auf die Verwendung absoluter Grenzwerte weitgehend verzichtet werden: Die Auswertung erfolgt relativ wie in Figur 9 gezeigt: Das "Tal" im Messstrom sollte tiefer sein als das vorherige "Tal" im Messstrom, optional während der Strom in der drehmomentbildenden Phase gleichzeitig je ein Maximum aufweist.

Um den Signal-Rauschabstand zu verbessern, kann die Erkennung der Rotornutung 200 nicht anhand einzelner (Strom- oder Induktivitäts-) Messwerte erfolgen, sondern anhand von Integralen dieser Messwerte über Zeitfenster, wobei diese Integrale ebenfalls je als Induktivitätswert verstanden werden können. Die Größe der Zeitfenster ergibt sich auf Basis der erwarteten Rotorschwingung.

Zusammenfassend ist festzustellen, dass mit einem Ausführungsbeispiel des hier vorgestellten Verfahrens bzw. einer entsprechenden Ansteuereinheit ein zugleich geberloser wie schneller und zuverlässiger Anlauf für einen geschalteten Reluktanzmotor (Switched Reluctance Motor, SRM) realisiert werden kann.

## Patentansprüche

1. Verfahren zur Ansteuerung eines Reluktanzmotors (110) mit einem Rotor (145) mit einer Vorzugsrichtung im ausgerichteten Zustand und einem Stator mit zumindest zwei Phasen (Phase 1, Phase 2, 135a, 135b), **dadurch gekennzeichnet, dass** das Verfahren die folgenden Schritte
aufweist:
- Bestromen zumindest einer ersten Phase (Phase 1, 135a) und einer zweiten Phase (135b), um den Rotor (145) zu einer Schwingung um die erste (Phase 1, 135a) oder die zweite Phase (135b) anzuregen;
- Erfassen der Induktivitätswerte der mindestens zwei Phasen (Phase 1, Phase 2, 135a, 135b), um die Phase mit dem höheren Induktivitätswert zu ermitteln;
- Bestromen nur der Phase mit dem erfassten kleineren Induktivitätswert, um eine Schwingung des Rotors (145) um diese Phase anzuregen, und Erfassen eines ersten Verlaufs des Induktivitätswerts der anderen Phase; und
- Starten des Reluktanzmotors (110), wenn im ersten Verlauf des Induktivitätswerts auf ein lokales Maximum ein weiteres lokales Maximum mit größerer Amplitude folgt.

2. Verfahren nach Anspruch 1, wobei die Induktivität erfasst wird, indem die jeweilige Phase (Phase 1, Phase 2, 135a, 135b) mit einem oder mehreren Spannungspulsen beaufschlagt und der entsprechende Strom in der Phase gemessen wird, wobei die Amplitude des Stroms antiproportional zur Induktivität ist.

3. Verfahren nach einem der vorhergehenden Ansprüche, wobei der Rotor (145) asymmetrisch geformt ist, um die Vorzugsrichtung im ausgerichteten Zustand zu erzielen.

4. Verfahren nach einem der vorhergehenden Ansprüche, wobei die mindestens zwei Phasen (Phase 1, Phase 2, 135a, 135b) senkrecht zueinander ausgerichtet sind, wobei das Verfahren weiter umfasst:
Erfassen eines zweiten Verlaufs des Induktivitätswerts der Phase, um die der Rotor (145) schwingt;
wobei lokale Minima im zweiten Verlauf beim Bestimmen der lokalen Maxima der Induktivität berücksichtigt werden.

5. Verfahren nach einem der vorhergehenden Ansprüche, wobei die Frequenz der Schwingung des Rotors (145) um die Phase, die sich aus dem angelegten Strom und der bekannten Massenträgheit des Rotors (145) ergibt, beim Bestimmen der lokalen Maxima der Induktivität berücksichtigt wird.

6. Verfahren nach einem der vorhergehenden Ansprüche, wobei das Ermitteln des ersten und/oder zweiten Verlaufs des Induktivitätswerts erst nach einer Einschwingphase des Rotors (145) beginnt, wobei die Einschwingphase mindestens ein vorgegebenes Zeitintervall und/oder eine vorgegebene Anzahl von Schwingungen des Rotors (145) und/oder eine vorgegebene Anzahl von Extremwerten im Verlauf des Induktivitätswerts umfasst.

7. Verfahren nach einem der vorhergehenden Ansprüche, wobei der Schritt des Bestromens zumindest einer ersten Phase (Phase 1, 135a) und einer zweiten Phase (Phase 2, 135b), um den Rotor (145) zu einer Schwingung um die erste (Phase 1, 135a) oder die zweite Phase (Phase 2, 135b) anzuregen, wiederholt wird, falls im Schritt des Erfassens der Induktivitätswerte der mindestens zwei Phasen (Phase 1, Phase 2, 135a, 135b), um die Phase mit dem höheren Induktivitätswert zu ermitteln, erkannt wird, dass der Rotor nicht um die erste Phase (Phase 1, 135a) oder die zweite Phase (Phase 2, 135b) schwingt.

8. Ansteuerungseinheit zur Ansteuerung eines Reluktanzmotors (110) mit einem Rotor (145) mit einer Vorzugsrichtung im ausgerichteten Zustand und einem Stator mit zumindest zwei Phasen (Phase 1, Phase 2, 135a, 135b), **dadurch gekennzeichnet, dass** die Ansteuerungseinheit dazu eingerichtet ist, die folgenden Schritte des Verfahrens gemäß einem der vorangegangenen Ansprüche auszuführen:
- Bestromen zumindest einer ersten Phase (Phase 1, 135a) und einer zweiten Phase (135b), um den Rotor (145) zu einer Schwingung um die erste (Phase 1, 135a) oder die zweite Phase (135b) anzuregen;
- Erfassen der Induktivitätswerte der mindestens zwei Phasen (Phase 1, Phase 2, 135a, 135b), um die Phase mit dem höheren Induktivitätswert zu ermitteln;
- Bestromen nur der Phase mit dem erfassten kleineren Induktivitätswert, um eine Schwingung des Rotors (145) um diese Phase anzuregen, und Erfassen eines ersten Verlaufs des Induktivitätswerts der anderen Phase; und
- Starten des Reluktanzmotors (110), wenn im ersten Verlauf des Induktivitätswerts auf ein lokales Maximum ein weiteres lokales Maximum mit größerer Amplitude folgt.

9. Reluktanzmotor (110) mit einem Rotor (145) mit einer Vorzugsrichtung im ausgerichteten Zustand und einem Stator mit zumindest zwei Phasen (Phase 1, Phase 2, 135a, 135b), sowie einer Ansteuerungseinheit gemäß Anspruch 8, wobei der Reluktanzmotor (110) keinen Rotorlagegeber aufweist.

10. Reluktanzmotor (110) nach Anspruch 9, wobei der Rotor (145) asymmetrisch geformt ist, um die Vorzugsrichtung im ausgerichteten Zustand zu erzielen.

11. Haushaltgerät (100), insbesondere Staubsauger, mit einem Reluktanzmotor (110) gemäß Anspruch 9 oder 10.

## Claims

1. Method for controlling a reluctance motor (110) having a rotor (145), which has a preferred direction in the aligned state, and a stator having at least two phases (phase 1, phase 2, 135a, 135b), **characterised in that** the method comprises the following steps:
- energising at least a first phase (phase 1, 135a) and a second phase (135b) in order to excite the rotor (145) to oscillate around the first (phase 1, 135a) or the second phase (135b);
- detecting the inductance values of the at least two phases (phase 1, phase 2, 135a, 135b) in order to determine the phase having the higher inductance value;
- energising only the phase having the detected smaller inductance value in order to excite an oscillation of the rotor (145) around this phase and detecting a first course of the inductance value of the other phase; and
- starting the reluctance motor (110) if, in the first course of the inductance value, a local maximum is followed by a further local maximum having a greater amplitude.

2. Method according to claim 1, wherein the inductance is detected by one or more voltage pulses being applied to the particular phase (phase 1, phase 2, 135a, 135b) and the corresponding current in the phase being measured, wherein the amplitude of the current is disproportional to the inductance.

3. Method according to either of the preceding claims, wherein the rotor (145) is asymmetrically shaped to achieve the preferred direction in the aligned state.

4. Method according to any of the preceding claims, wherein the at least two phases (phase 1, phase 2, 135a, 135b) are aligned at right angles to one another, wherein the method further comprises:
detecting a second course of the inductance value of the phase around which the rotor (145) oscillates;
wherein local minima are taken into account in the second course when determining the local maxima of the inductance.

5. Method according to any of the preceding claims, wherein the frequency of the oscillation of the rotor (145) around the phase, which results from the applied current and the known mass inertia of the rotor (145), is taken into account when determining the local maxima of the inductance.

6. Method according to any of the preceding claims, wherein the determination of the first and/or second course of the inductance value begins only after a transient phase of the rotor (145), wherein the transient phase comprises at least a predetermined time interval and/or a predetermined number of oscillations of the rotor (145) and/or a predetermined number of extreme values in the course of the inductance value.

7. Method according to any of the preceding claims, wherein the step of energising at least a first phase (phase 1, 135a) and a second phase (phase 2, 135b) in order to excite the rotor (145) to oscillate around the first (phase 1, 135a) or the second phase (phase 2, 135b) is repeated if, in the step of detecting the inductance values of the at least two phases (phase 1, phase 2, 135a, 135b), in order to detect the phase having the higher inductance value, it is identified that the rotor is not oscillating around the first phase (phase 1, 135a) or the second phase (phase 2, 135b).

8. Control unit for controlling a reluctance motor (110) having a rotor (145), which has a preferred direction in the aligned state, and a stator having at least two phases (phase 1, phase 2, 135a, 135b), **characterised in that** the control unit is designed to carry out the following steps of the method according to any of the preceding claims:
- energising at least a first phase (phase 1, 135a) and a second phase (135b) in order to excite the rotor (145) to oscillate around the first (phase 1, 135a) or the second phase (135b);
- detecting the inductance values of the at least two phases (phase 1, phase 2, 135a, 135b) in order to determine the phase having the higher inductance value;
- energising only the phase having the detected smaller inductance value in order to excite an oscillation of the rotor (145) around this phase and detecting a first course of the inductance value of the other phase; and
- starting the reluctance motor (110) if, in the first course of the inductance value, a local maximum is followed by a further local maximum having a greater amplitude.

9. Reluctance motor (110) having a rotor (145), which has a preferred direction in the aligned state, and a stator having at least two phases (phase 1, phase 2, 135a, 135b), and a control unit according to claim 8, wherein the reluctance motor (110) has no rotor position encoder.

10. Reluctance motor (110) according to claim 9, wherein the rotor (145) is asymmetrically shaped to achieve the preferred direction in the aligned state.

11. Domestic appliance (100), in particular a vacuum cleaner, having a reluctance motor (110) according to either claim 9 or claim 10.

## Revendications

1. Procédé de commande d'un moteur à réluctance (110) comportant un rotor (145) présentant une direction préférentielle à l'état orienté et un stator comportant au moins deux phases (phase 1, phase 2, 135a, 135b), **caractérisé en ce que** le procédé présente les étapes suivantes :
- alimentation d'au moins une première phase (phase 1, 135a) et une seconde phase (135b) afin d'exciter le rotor (145) de façon à ce qu'il oscille autour de la première phase (phase 1, 135a) ou de la seconde phase (135b) ;
- détection des valeurs d'inductance des au moins deux phases (phase 1, phase 2, 135a, 135b) afin de déterminer la phase ayant la valeur d'inductance la plus élevée ;
- alimentation uniquement de la phase ayant la valeur d'inductance la plus petite détectée afin d'exciter une oscillation du rotor (145) autour de cette phase, et détection d'une première variation de la valeur d'inductance de l'autre phase ; et
- démarrage du moteur à réluctance (110) si, dans la première variation de la valeur d'inductance, un maximum local est suivi d'un autre maximum local ayant une amplitude plus grande.

2. Procédé selon la revendication 1, dans lequel l'inductance est détectée en soumettant la phase respective (phase 1, phase 2, 135a, 135b) à une ou plusieurs impulsions de tension et en mesurant le courant correspondant dans la phase, l'amplitude du courant étant anti-proportionnelle à l'inductance.

3. Procédé selon l'une des revendications précédentes, dans lequel le rotor (145) est formé de manière asymétrique afin d'atteindre la direction préférentielle à l'état orienté.

4. Procédé selon l'une des revendications précédentes, dans lequel les au moins deux phases (phase 1, phase 2, 135a, 135b) sont orientées perpendiculairement l'une à l'autre, le procédé comprenant en outre :
la détection d'une seconde variation de la valeur d'inductance de la phase autour de laquelle le rotor (145) oscille ;
les minima locaux étant pris en compte dans la seconde variation lors de la détermination des maxima locaux de l'inductance.

5. Procédé selon l'une des revendications précédentes, dans lequel la fréquence de l'oscillation du rotor (145) autour de la phase, laquelle fréquence résulte du courant appliqué et de l'inertie de masse connue du rotor (145), est prise en compte lors de la détermination des maxima locaux de l'inductance.

6. Procédé selon l'une des revendications précédentes, dans lequel la détermination de la première et/ou de la seconde variation de la valeur d'inductance ne commence qu'après une phase transitoire du rotor (145), la phase transitoire comprenant au moins un intervalle de temps prédéterminé et/ou un nombre prédéterminé d'oscillations du rotor (145) et/ou un nombre prédéterminé de valeurs extrêmes dans la variation de la valeur d'inductance.

7. Procédé selon l'une des revendications précédentes, dans lequel l'étape d'alimentation d'au moins une première phase (phase 1, 135a) et une seconde phase (phase 2, 135b) afin d'exciter le rotor (145) de façon à ce qu'il oscille autour de la première phase (phase 1, 135a) ou de la seconde phase (phase 2, 135b) est répétée si, à l'étape de détection des valeurs d'inductance des au moins deux phases (phase 1, phase 2, 135a, 135b) afin de déterminer la phase ayant la valeur d'inductance la plus élevée, il est détecté que le rotor n'oscille pas autour de la première phase (phase 1, 135a) ou de la seconde phase (phase 2, 135b).

8. Unité de commande destinée à commander un moteur à réluctance (110) comportant un rotor (145) présentant une direction préférentielle à l'état orienté et un stator comportant au moins deux phases (phase 1, phase 2, 135a, 135b), **caractérisé en ce que** l'unité de commande est conçue pour mettre en œuvre les étapes suivantes du procédé selon l'une des revendications précédentes :
- alimentation d'au moins une première phase (phase 1, 135a) et une seconde phase (135b) afin d'exciter le rotor (145) de façon à ce qu'il oscille autour de la première phase (phase 1, 135a) ou de la seconde phase (135b) ;
- détection des valeurs d'inductance des au moins deux phases (phase 1, phase 2, 135a, 135b) afin de déterminer la phase ayant la valeur d'inductance la plus élevée ;
- alimentation uniquement de la phase ayant la valeur d'inductance la plus petite détectée afin d'exciter une oscillation du rotor (145) autour de cette phase, et détection d'une première variation de la valeur d'inductance de l'autre phase ; et
- démarrage du moteur à réluctance (110) si, dans la première variation de la valeur d'inductance, un maximum local est suivi d'un autre maximum local ayant une amplitude plus grande.

9. Moteur à réluctance (110) comportant un rotor (145) présentant une direction préférentielle à l'état orienté et un stator ayant au moins deux phases (phase 1, phase 2, 135a, 135b), ainsi qu'une unité de commande selon la revendication 8, le moteur à réluctance (110) ne comportant pas de capteur de position du rotor.

10. Moteur à réluctance (110) selon la revendication 9, dans lequel le rotor (145) est formé de manière asymétrique afin d'atteindre la direction préférée à l'état orienté.

11. Appareil électroménager (100), en particulier aspirateur, comportant un moteur à réluctance (110) selon la revendication 9 ou 10.
